# EUROPEAN PATENT SPECIFICATION

(11) **EP 4 316 636 B1**
(45) Date of publication and mention of the grant of the patent: **11.11.2026**
(21) Application number: 22842419.8
(22) Date of filing: 12.07.2022
(51) Int. Cl.: B01F 25/45, B01F 35/75, B01J 8/44, B01F 101/00

(54) **DISTRIBUTING PLATE FOR HIGH-VISCOSITY FLUID AND APPARATUS OF DISTRIBUTING HIGH-VISCOSITY FLUID INCLUDING THE SAME**
VERTEILERPLATTE FÜR HOCHVISKOSE FLÜSSIGKEIT UND VORRICHTUNG ZUM VERTEILEN EINER HOCHVISKOSEN FLÜSSIGKEIT MIT EINER SOLCHEN VERTEILERPLATTE
PLAQUE DE DISTRIBUTION POUR FLUIDE À HAUTE VISCOSITÉ ET APPAREIL DE DISTRIBUTION D'UN FLUIDE À HAUTE VISCOSITÉ COMPRENANT UNE TELLE PLAQUE DE DISTRIBUTION

(30) Priority: 12.07.2021 KR 20210091026; 11.07.2022 KR 20220085285
(43) Date of publication of application: 07.02.2024
(73) Proprietor: LG Chem, Ltd., Seoul 07336 (KR)
(72) Inventor: KWON, Youbin, Daejeon 34122 (KR); SONG, Youngsoo, Daejeon 34122 (KR); PARK, Cheolho, Daejeon 34122 (KR); IM, Ye Hoon, Daejeon 34122 (KR); YE, Wonkyoung, Daejeon 34122 (KR)
(74) Representative: Goddar, Heinz J.
(86) International application number: PCT/KR2022/010109
(87) International publication number: WO 2023/287157

(56) References cited:
- CN-A- 105 890 409
- JP-A- 2011 128 561
- JP-A- 2020 193 116
- KR-A- 20000 040 528
- KR-A- 20090 019 381

## Description

### [Technical Field]

The present invention relates to an apparatus of distributing a high-viscosity fluid including a distributing plate, and more particularly, to an apparatus of distributing a high-viscosity fluid including the distributing plate capable of evenly distributing and discharging the high-viscosity fluid .

### [Background Art]

A polymer solution polymerized in a manufacturing process of styreneacrylonitrile polymer (SAN) is introduced into a preheater. Since the polymer solution introduced into the preheater has a high viscosity of 10,000 cP or more, the polymer solution is distributed to a uniform flow rate by a distributing plate and introduced into a tube bundle of the preheater, and a residual monomer and solvent that are heated and not reacted in the tube evaporate.

However, if the polymer solution supplied to the distributing plate is discharged to the tube bundle in a state of not being evenly distributed, a deviation occurs in the flow rate of the solution flowing into each tube of the tube bundle. Therefore, heat supplied from the heater cannot evaporate all monomers in the tube into which the solution is excessively introduced, and thus, the monomers may still remain in the tube. Meanwhile, the tube into which the solution is insufficiently introduced may be overheated and the polymer may be damaged or the polymer may adhere to a wall surface of the tube.

Recently, as the use of polymer materials, such as SAN, has increased, manufacturing facilities for polymer materials have been scaled up, and accordingly, a larger distributing plate has been required. However, if the size of the distributing plate in the related art is simply increased, the high-viscosity fluid may not be uniformly distributed, resulting in deviation in the flow rate of the fluid flowing into each tube.

The above information disclosed in this Background section is only for enhancement of understanding of the background of the invention and therefore it may contain information that does not form the prior art that is already known in this country to a person of ordinary skill in the art.

JP 2020193116 A discloses a distributing plate for a high-viscosity fluid, the distributing plate comprising a flat upper surface; a side surface having a diameter increasing downwardly from the upper surface; and holes.

CN 105890409 A discloses an apparatus of distributing a high-viscosity fluid, comprising: a distributing plate, distributing and discharging the high-viscosity fluid; and a tube bundle located below the distributing plate and including a plurality of tubes receiving the high-viscosity fluid discharged from the distributing plate, wherein the distributing plate comprises a flat upper surface and a side surface having a diameter increasing downwardly from the upper surface.

### [Disclosure]

### [Technical Problem]

An exemplary embodiment of the present invention attempts to provide an apparatus of distributing a fluid including a distributing plate capable of evenly distributing and discharging a high-viscosity fluid.

### [Technical Solution]

According to the present invention, an apparatus of distributing a high-viscosity fluid is provided, comprising: a distributing plate distributing and discharging the high-viscosity fluid; and a tube bundle located below the distributing plate and including a plurality of tubes receiving the high-viscosity fluid discharged from the distributing plate, wherein the distributing plate comprises a flat upper surface; a side surface having a diameter increasing downwardly from the upper surface; a plurality of inner holes arranged along a plurality of first imaginary concentric circles on the upper surface; and a plurality of outer holes arranged along a plurality of second imaginary concentric circles on the side surface, wherein a ratio of an area of each inner hole to an area of each outer hole is 1.2 to 1.4.

Each of the inner holes and the outer holes may be formed in an elliptical shape having a width and a length, the width of each of the inner holes may be 10 mm to 45 mm and the length of each of the inner holes is 10 mm to 38 mm, and the width of each of the outer holes may be 10 mm to 30 mm and the length of each of the outer holes is 10 mm to 40 mm.

The distributing plate may have a truncated cone shape with an open lower surface, and a height of the truncated cone may be 40 mm to 100 mm.

A diameter of the upper surface may be 1040 mm to 1140 mm, and a diameter of the lower surface may be 1700 mm to 1860 mm.

The plurality of first imaginary concentric circles may be 8 circles, and the plurality of second imaginary concentric circles may be 8 circles.

A sum of the number of the plurality of inner holes and the number of the plurality of outer holes may be 1000 or more.

The number of the plurality of inner holes may be 294, and the number of the plurality of outer holes may be 714.

### [Advantageous Effects]

According to the present invention, the high-viscosity fluid may be evenly distributed and discharged by optimizing the number and arrangement of inner and outer holes formed in the distributing plate.

In addition, the high-viscosity fluid may be more evenly distributed and discharged by optimizing the area ratio of the inner hole and the outer hole and the height of the distributing plate.

In addition, the effects that may be obtained or predicted by the the present invention will be explicitly or implicitly disclosed in the detailed description of the exemplary embodiments of the present invention. That is, various effects expected according to the present invention will be disclosed within the detailed description to be described below.

### [Description of the Drawings]

The exemplary embodiments herein may be better understood with reference to the following description in conjunction with the accompanying drawings in which like reference numbers denote the same or functionally similar elements.
FIG. 1 is a schematic diagram of an apparatus of distributing a high-viscosity fluid according to an exemplary embodiment of the present invention.
FIG. 2 is a plan view of a distributing plate for a high-viscosity fluid used according to an exemplary embodiment of the present invention.
FIG. 3 is a side view of a distributing plate for a high-viscosity fluid used according to an exemplary embodiment of the present invention.
FIG. 4 is a plan view illustrating a shape of a hole formed in a distributing plate for a high-viscosity fluid used according to an exemplary embodiment of the present invention.
FIG. 5 is a plan view of a distributing plate for a high-viscosity fluid according to Comparative Example 1.
FIG. 6 is a side view of a distributing plate for a high-viscosity fluid according to Comparative Example 1.
FIG. 7 shows a flow velocity of a fluid at a lower portion of a distributing plate according to Comparative Example 1.
FIG. 8 shows a flow velocity of a fluid at a lower portion of a distributing plate according to Example 1.
FIG. 9 shows a flow velocity of a fluid at a lower portion of a distributing plate according to Example 2.
FIG. 10 shows a flow velocity of a fluid at a lower portion of a distributing plate according to Example 3.
FIG. 11 shows a flow velocity of a fluid at a lower portion of a distributing plate according to Example 4.
FIG. 12 is a graph showing flow velocities of fluids at lower portions of distributing plates according to Example 1 to Example 4 and a distributing plate according to Comparative Example 1 according to positions of the distributing plates.
FIG. 13 shows a flow velocity of a fluid at a lower portion of a distributing plate according to Comparative Example 2.
FIG. 14 shows a flow velocity of a fluid at a lower portion of a distributing plate according to Comparative Example 3.
FIG. 15 shows a flow velocity of a fluid at a lower portion of a distributing plate according to Comparative Example 4.
FIG. 16 shows a flow velocity of a fluid at a lower portion of a distributing plate according to Comparative Example 5.
FIG. 17 is a graph showing flow velocities of fluids at lower portions of a distributing plate according to Example 2 and distributing plates according to Comparative Example 2 to Comparative Example 5 according to positions of the distributing plates.

It should be understood that the drawings referenced above are not necessarily drawn to scale but present rather simplified representations of various preferred features illustrating the basic principles of the present invention. The specific design features of the present invention including, for example, specific sizes, directions, locations, and shapes, may be determined in part by specifically intended applications and environment of use.

### [Mode for Invention]

The terminology used herein is for the purpose of describing specific exemplary embodiments only and is not intended to limit the present invention. As used herein, the singular forms are intended to include the plural forms as well, unless the context clearly indicates otherwise. The terms "comprise" and/or "comprising", when used herein, specify the presence of recited features, integers, levels, operations, components and/or components, but It will also be understood that does not exclude the presence or addition of one or more of the features, integers, levels, acts, elements, components and/or groups thereof. As used herein, the term "and/or" includes any one or all combinations of the associated listed items.

A distributing plate for a high-viscosity fluid used according to exemplary embodiments of the present invention optimizes the number and arrangement of inner and outer holes, and optimizes an area ratio of the inner and outer holes and a height of the distributing plate, thereby evenly distributing and discharging the high-viscosity fluid.

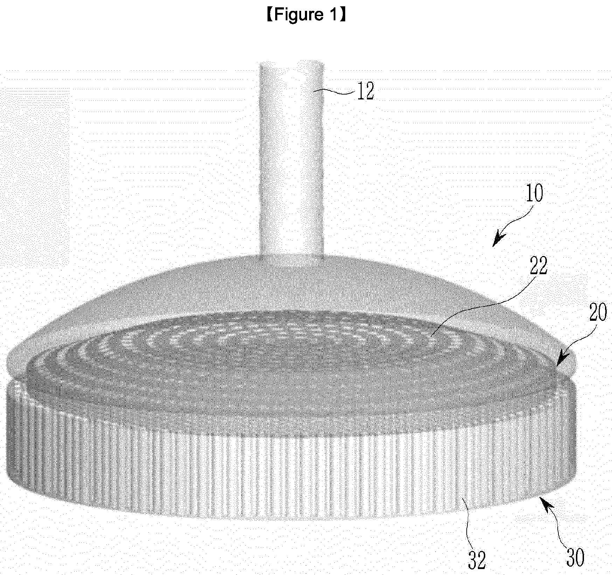

FIG. 1 is a schematic diagram of an apparatus of distributing a high-viscosity fluid according to an exemplary embodiment of the present invention.

As shown in FIG. 1, an apparatus 10 of distributing high-viscosity fluid according to an exemplary embodiment of the present invention is installed in an upper portion of a preheater (not shown) to evenly distribute and discharge the high-viscosity fluid supplied into the preheater through an inlet 12. The apparatus 10 of distributing a high-viscosity fluid includes a distributing plate 20 and a tube bundle 30. A plurality of holes 22 are formed in the distributing plate 20, and the tube bundle 30 includes a plurality of tubes 32 corresponding to the plurality of holes 22. The plurality of tubes 32 are disposed below the distributing plate 20 and extend downwardly. Each tube 32 communicates with each hole 22, and the high-viscosity fluid discharged through the hole 22 flows into the corresponding tube 32, moves downwardly, and is heated.

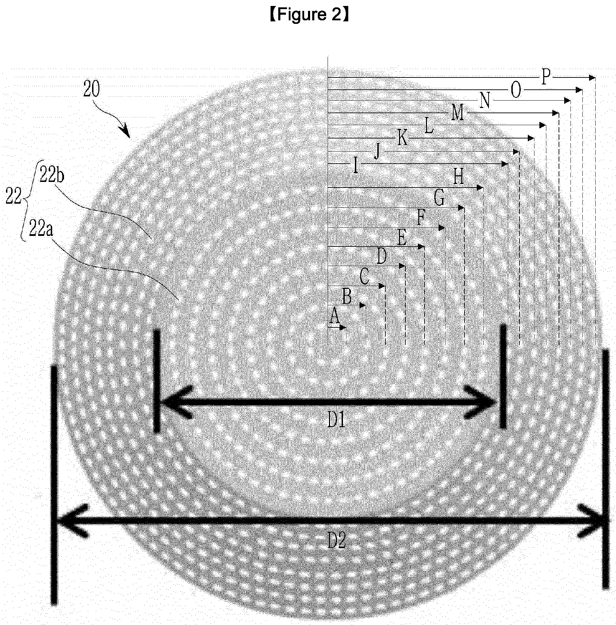

Hereinafter, the distributing plate 20 for a high-viscosity fluid used according to an exemplary embodiment of the present invention will be described in more detail with reference to FIGS. 2 to 4.

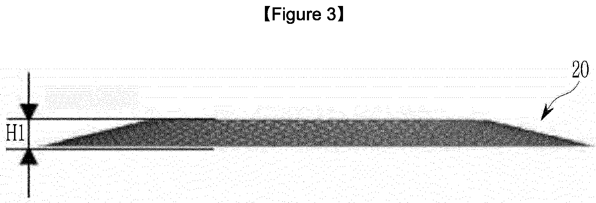

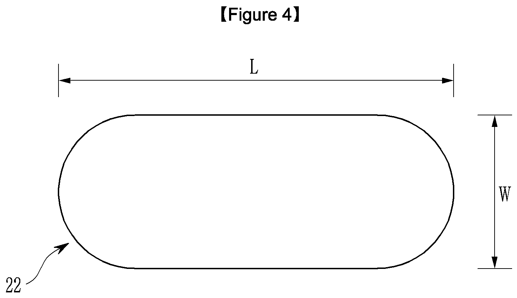

FIG. 2 is a plan view of a distributing plate for a high-viscosity fluid used according to an exemplary embodiment of the present invention, FIG. 3 is a side view of a distributing plate for a high-viscosity fluid used according to an exemplary embodiment of the present invention, and FIG. 4 is a plan view showing a shape of a hole formed in a distributing plate for a high-viscosity fluid used according to an exemplary embodiment of the present invention.

As shown in FIGS. 2 and 3, the distributing plate 20 for a high-viscosity fluid used according to an exemplary embodiment of the present invention has a substantially truncated cone shape including a substantially flat upper surface and a side surface having a diameter increasing downwardly from the upper surface. In addition, a lower surface of the distributing plate 20 is open, and the tube bundle 30 is disposed on the open lower surface of the distributing plate 20.

A plurality of holes 22 are formed along a plurality of imaginary concentric circles on both the upper and side surfaces of the distributing plate 20. Here, the plurality of holes 22 formed on the upper surface of the distributing plate 20 are referred to as inner holes 22a, and the plurality of holes 22 formed on the side surface of the distributing plate 20 are referred to as outer holes 22b. In addition, the plurality of inner holes 22a may be arranged along first imaginary concentric circles A to H, and the plurality of outer holes 22b may be arranged along second imaginary concentric circles I to P. In an example, the plurality of holes 22 are arranged along 16 concentric circles A to P, and here, the plurality of inner holes 22a are arranged along eight first concentric circles A to H, and the plurality of outer holes 22b are arranged along eight second concentric circles I to P. However, the total number of concentric circles (equal to the sum of the number of first concentric circles and the number of second concentric circles), the number of first concentric circles, and the number of second concentric circles are not limited to 16, 8, and 8, respectively.

The total number of holes 22 formed in the distributing plate 20 may be 1000 or more so that the high-viscosity fluid may be evenly distributed by the distributing plate 20. In an example, the total number of holes 22 formed in the distributing plate 20 is 1008. However, the total number of holes 22 formed in the distributing plate 20 is not limited to 1008.

Compared to the distributing plate 20 in the related art, in the distributing plate 20 used according to an exemplary embodiment of the present invention, a diameter of the upper surface of the distributing plate 20 increases and a height of the distributing plate 20 is lowered so that the high-viscosity fluid is evenly distributed. Here, the diameter of the upper surface of the distributing plate 20 is referred to as D1, the diameter of the lower surface of the distributing plate 20 is referred to as D2, and the height of the distributing plate 20 is referred to as H1. In an example, the diameter D1 of the upper surface of the distributing plate 20 may be 1040 mm to 1140 mm, and the height H1 of the distributing plate 20 may be 40 mm to 100 mm. In addition, the diameter D2 of the lower surface of the distributing plate 20 may be determined according to a diameter of the preheater and may be 1700 mm to 1860 mm.

As shown in FIG. 4, according to an exemplary embodiment of the present invention, the hole 22 formed in the distributing plate 20 may have an elliptical shape. Here, as shown in FIG. 4, a figure having the 'elliptical shape' refers to a figure having a width W in a radial direction of the concentric circle and a length L in a tangential direction of the concentric circle, in which sides constituting the figure are generally curved to be connected to each other. Also, the 'elliptical shape' may include a 'circular shape'.

In an example, the width W of each inner hole 22a may be set to 10 mm to 45 mm, and the length L of each inner hole 22a may be set to 10 mm to 38 mm. The width W of each outer hole 22b may be set to 10 mm to 30 mm, and the length L of each outer hole 22b may be set to 10 mm to 40 mm. The size of one of the plurality of holes 22 formed in one concentric circle may be the same as the size of another of the plurality of holes 22 formed in the one concentric circle. The size of the inner hole 22a formed in one first concentric circle may be the same as or different from the size of the inner hole 22a formed in another first concentric circle, and the size of the outer hole 22b formed in one second concentric circle may be the same as or different from the size of the outer hole 22b formed in another second concentric circle.

In an example, an area of one of the inner holes 22a is substantially the same as the area of another inner hole 22a, and an area of one of the outer holes 22b is substantially the same as the area of another outer hole 22b. Here, the fact that the area of one inner hole 22a is substantially the same as the area of another inner hole 22a means that a value obtained by dividing a difference between the area of one inner hole 22a and the area of another inner hole 22a by an average of the areas of the inner holes 22a is, but is not limited to, 5% or less. In addition, the fact that the area of one outer hole 22b is substantially the same as the area of another outer hole 22b means that a value obtained by dividing a difference between the area of one outer hole 22b and the area of another outer hole 22b by an average of the areas of the outer holes 22b is, but is not limited to, 5% or less.

The area of each inner hole 22a may be set to be larger than the area of each outer hole 22b so that the high-viscosity fluid may be evenly distributed. In an example, a ratio of the area of each inner hole 22a to the area of each outer hole 22b may be 1.2 to 1.4.

### Comparative Example 1

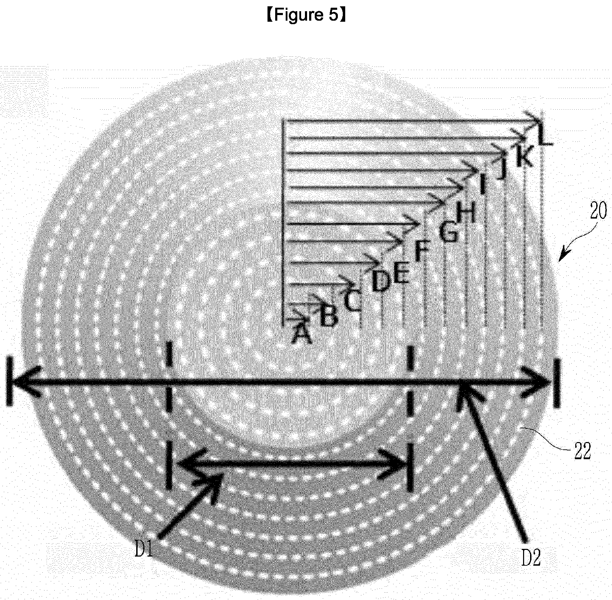

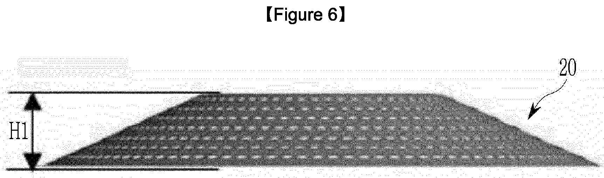

FIG. 5 is a plan view of a distributing plate for a high-viscosity fluid according to Comparative Example 1, and FIG. 6 is a side view of a distributing plate for a high-viscosity fluid according to Comparative Example 1. The distributing plate 20 according to Comparative Example 1 is formed by scaling up the distributing plate 20 in the related art.

As shown in FIGS. 5 and 6, the distributing plate 20 according to Comparative Example 1 also includes the flat upper surface and the side surface having the diameter increasing downwardly from the upper surface. According to Comparative Example 1, the diameter D1 of the upper surface of the distributing plate 20 is 800 mm, the diameter D2 of the lower surface of the distributing plate 20 is 1854 mm, and the height H1 of the distributing plate 20 is 225 mm.

A total of 714 holes 22 are formed in the distributing plate 20 along 12 concentric circles. The plurality of inner holes 22a are formed on the upper surface of the distributing plate 20 along five first concentric circles, and the plurality of outer holes 22b are formed along seven second concentric circles on the side surface of the distributing plate 20. The size of one of the plurality of holes 22 formed in one concentric circle is the same as the size of another one of the plurality of holes 22 formed in the one concentric circle.

According to Comparative Example 1, the ratio of the area of each inner hole 22a to the area of each outer hole 22b is not particularly set. In particular, the area of the inner hole 22a formed in one first concentric circle may be the same as or different from the area of the inner hole 22a formed in another first concentric circle, and the area of the outer hole 22b formed in one second concentric circle may be the same as or different from the area of the outer hole 22b formed in another second concentric circle.

The positions, specifications, and number of the plurality of holes 22 according to Comparative Example 1 are described in [Table 1].

**[Table 1]**

| Concentric circle | Distance from center (mm) | Width of hole W (mm) | Length of hole L (mm) | Number of holes formed in concentric circle |
|---|---|---|---|---|
| A | 73 | 21.7 | 38.9 | 8 |
| B | 145 | 21.7 | 38.9 | 16 |
| C | 218 | 21.7 | 38.9 | 24 |
| D | 291 | 23.3 | 40.4 | 31 |
| E | 364 | 23.3 | 40.2 | 39 |
| F | 437 | 20.0 | 35.3 | 62 |
| G | 508 | 20.0 | 35.7 | 71 |
| H | 579 | 21.5 | 36.8 | 79 |
| I | 650 | 21.5 | 37.8 | 86 |
| J | 721 | 22.9 | 39.0 | 93 |
| K | 792 | 22.9 | 39.0 | 100 |
| L | 863 | 24.3 | 41.3 | 105 |

### Example1 to Example 4

The distributing plate 20 according to Example 1 to Example 4 includes the flat upper surface and the side surface having the diameter increasing downwardly from the upper surface. According to Example 1 to Example 4, the diameter D1 of the upper surface of the distributing plate 20 is 1131.5 mm, and the diameter D2 of the lower surface of the distributing plate 20 is 1854 mm. The height H1 of the distributing plate 20 according to Example 1 is 65 mm, the height H1 of the distributing plate 20 according to Example 2 is 80 mm, and the height H1 of the distributing plate 20 according to Example 3 and Example 4 is 50 mm.

According to Example 1 to Example 4, a total of 1008 holes 22 are formed in the distributing plate 20 along 16 concentric circles. The plurality of inner holes 22a are formed on the upper surface of the distributing plate 20 along eight first concentric circles, the number of inner holes 22a is 294, and the plurality of outer holes 22b are formed on the side surface of the distributing plate 20 along eight second concentric circles, and the number of outer holes 22b is 714. The size of one of the plurality of holes 22 formed in one concentric circle is the same as the size of another one of the plurality of holes 22 formed in the one concentric circle. In addition, the area of one inner hole 22a is the same as that of another inner hole 22a, and the area of one outer hole 22b is the same as that of another outer hole 22b.

According to Example 1 to Example 4, the ratio of the area of each inner hole 22a to the area of each outer hole 22b is set to 1.2 to 1.4. For example, according to Example 1, the ratio of the area of each inner hole 22a to the area of each outer hole 22b is 1.23. According to Example 2, the ratio of the area of each inner hole 22a to the area of each outer hole 22b is 1.28. According to Example 3, the ratio of the area of each inner hole 22a to the area of each outer hole 22b is 1.28. According to Example 4, the ratio of the area of each inner hole 22a to the area of each outer hole 22b is 1.37.

The positions, specifications and numbers of the plurality of holes 22 according to Example 1 to Example 4 are described in [Table 2] to [Table 5], respectively.

**[Table 2]**

| Concentric circle | Distance from center (mm) | Width of hole W (mm) | Length of hole L (mm) | Number of holes formed in concentric circle |
|---|---|---|---|---|
| A | 64 | 13 | 33 | 8 |
| B | 128 | 13 | 33 | 16 |
| C | 192 | 13 | 33 | 24 |
| D | 256 | 13 | 33 | 32 |
| E | 320 | 13 | 33 | 40 |
| F | 384 | 13 | 33 | 48 |
| G | 448 | 13 | 33 | 62 |
| H | 512 | 13 | 33 | 64 |
| I | 594 | 12 | 28 | 68 |
| J | 636 | 12 | 28 | 74 |
| K | 682 | 12 | 28 | 81 |
| L | 725 | 12 | 28 | 87 |
| M | 768 | 12 | 28 | 92 |
| N | 811 | 12 | 28 | 98 |
| O | 854 | 12 | 28 | 104 |
| P | 897 | 12 | 28 | 110 |

**[Table 3]**

| Concentric circle | Distance from center (mm) | Width of hole W (mm) | Length of hole L (mm) | Number of holes formed in concentric circle |
|---|---|---|---|---|
| A | 64 | 29 | 24 | 8 |
| B | 128 | 29 | 24 | 16 |
| C | 192 | 29 | 24 | 24 |
| D | 256 | 29 | 24 | 32 |
| E | 320 | 29 | 24 | 40 |
| F | 384 | 29 | 24 | 48 |
| G | 448 | 29 | 24 | 62 |
| H | 512 | 29 | 24 | 64 |
| I | 594 | 21 | 27 | 68 |
| J | 636 | 21 | 27 | 74 |
| K | 682 | 21 | 27 | 81 |
| L | 725 | 21 | 27 | 87 |
| M | 768 | 21 | 27 | 92 |
| N | 811 | 21 | 27 | 98 |
| O | 854 | 21 | 27 | 104 |
| P | 897 | 21 | 27 | 110 |

**[Table 4]**

| Concentric circle | Distance from center (mm) | Width of hole W (mm) | Length of hole L (mm) | Number of holes formed in concentric circle |
|---|---|---|---|---|
| A | 64 | 16.5 | 35 | 8 |
| B | 128 | 16.5 | 35 | 16 |
| C | 192 | 16.5 | 35 | 24 |
| D | 256 | 16.5 | 35 | 32 |
| E | 320 | 16.5 | 35 | 40 |
| F | 384 | 16.5 | 35 | 48 |
| G | 448 | 16.5 | 35 | 62 |
| H | 512 | 16.5 | 35 | 64 |
| I | 594 | 21 | 21.5 | 68 |
| J | 636 | 21 | 21.5 | 74 |
| K | 682 | 21 | 21.5 | 81 |
| L | 725 | 21 | 21.5 | 87 |
| M | 768 | 21 | 21.5 | 92 |
| N | 811 | 21 | 21.5 | 98 |
| O | 854 | 21 | 21.5 | 104 |
| P | 897 | 21 | 21.5 | 110 |

**[Table 5]**

| Concentric circle | Distance from center (mm) | Width of hole W (mm) | Length of hole L (mm) | Number of holes formed in concentric circle |
|---|---|---|---|---|
| A | 64 | 16.5 | 22.5 | 8 |
| B | 128 | 16.5 | 22.5 | 16 |
| C | 192 | 16.5 | 22.5 | 24 |
| D | 256 | 16.5 | 22.5 | 32 |
| E | 320 | 16.5 | 22.5 | 40 |
| F | 384 | 16.5 | 22.5 | 48 |
| G | 448 | 16.5 | 22.5 | 62 |
| H | 512 | 16.5 | 22.5 | 64 |
| I | 594 | 11.5 | 23.5 | 68 |
| J | 636 | 11.5 | 23.5 | 74 |
| K | 682 | 11.5 | 23.5 | 81 |
| L | 725 | 11.5 | 23.5 | 87 |
| M | 768 | 11.5 | 23.5 | 92 |
| N | 811 | 11.5 | 23.5 | 98 |
| O | 854 | 11.5 | 23.5 | 104 |
| P | 897 | 11.5 | 23.5 | 110 |

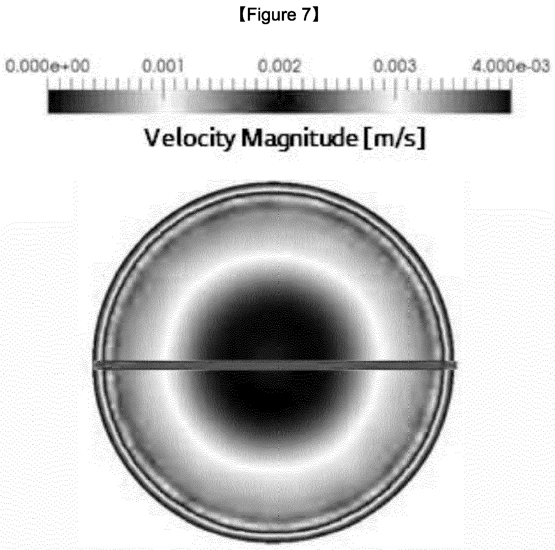

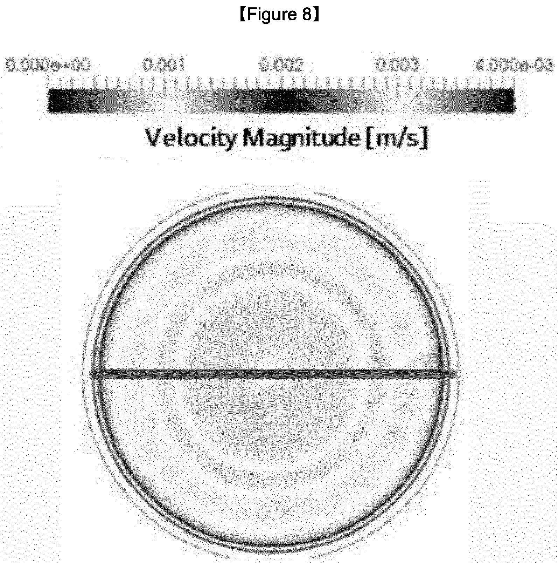

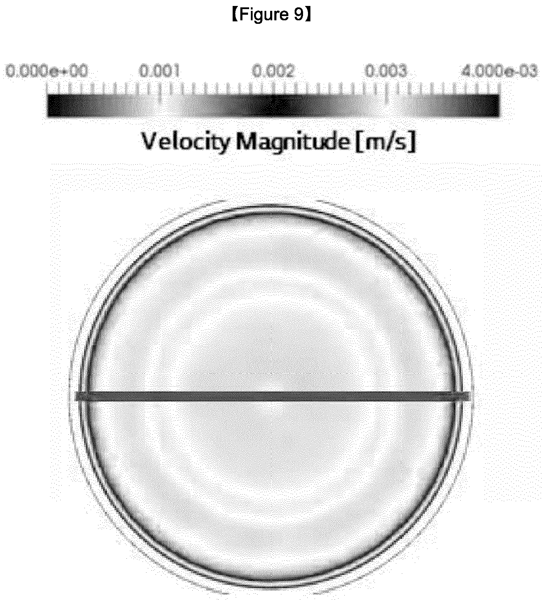

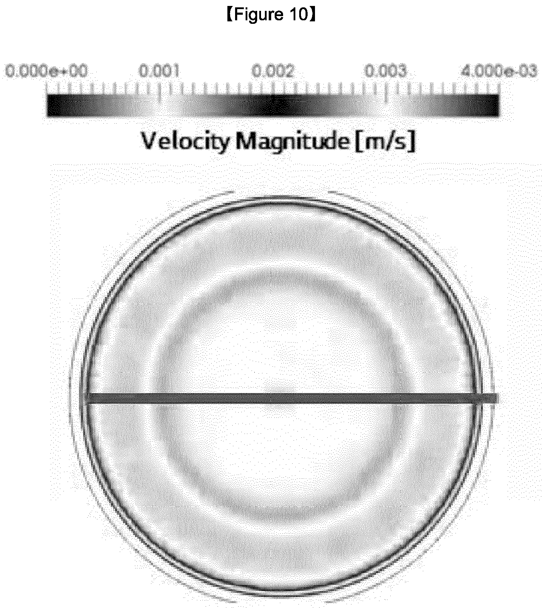

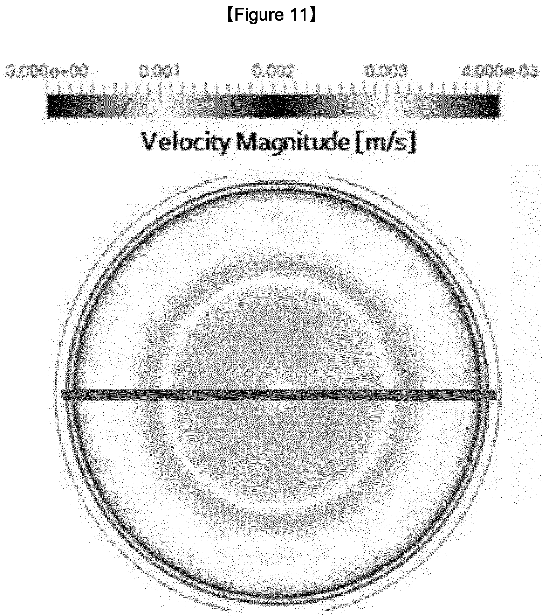

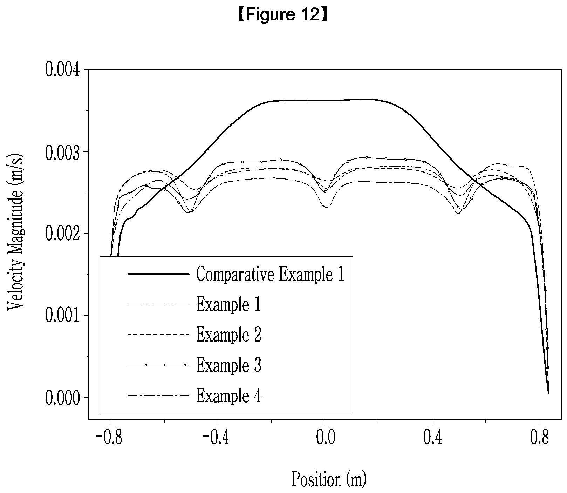

FIG. 7 shows a flow velocity of a fluid at a lower portion of a distributing plate according to Comparative Example 1, FIG. 8 shows a flow velocity of a fluid at a lower portion of a distributing plate according to Example 1, FIG. 9 shows a flow velocity of a fluid at a lower portion of a distributing plate according to Example 2, FIG. 10 shows a flow velocity of a fluid at a lower portion of a distributing plate according to Example 3, FIG. 11 shows a flow velocity of a fluid at a lower portion of a distributing plate according to Example 4, and FIG. 12 is a graph showing flow velocities of fluids at lower portions of distributing plates according to Examples 1 to 4 and a distributing plate according to Comparative Example 1 according to positions of the distributing plates.

As shown in FIGS. 7 to 12, the flow velocity of the high-viscosity fluid at the lower portion of the distributing plate 20 according to Comparative Example 1 is relatively fast as 0.0035 m/s at the lower portion of the flat surface and gradually slows toward an outer side in the radial direction at the lower portion of the side surface. Accordingly, a standard deviation of the flow velocity of the high-viscosity fluid at the lower portion of the distributing plate 20 according to Comparative Example 1 is 8.06*10⁻⁴, which is relatively large.

In contrast, the flow velocity of the high-viscosity fluid at the lower portion of the distributing plate 20 according to Example 1 to Example 4 is maintained within a range of 0.0023 m/s to 0.0028 m/s at the lower portion of the upper surface and the lower portion of the side surface. Accordingly, the standard deviation of the flow velocity of the high-viscosity fluid at the lower portion of the distributing plate 20 according to Example 1 is 4.05*10⁻⁴, the standard deviation of the flow velocity of the high-viscosity fluid at the lower portion of the distributing plate 20 according to Example 2 is 4.00*10⁻⁴, the standard deviation of the flow velocity of the high-viscosity fluid at the lower portion of the distributing plate 20 according to Example 3 is 4.12*10⁻⁴, and the standard deviation of the flow velocity of the high-viscosity fluid at the lower portion of the distributing plate 20 according to Example 4 is 3.71*10⁻⁴. That is, the standard deviation of the flow velocity of the high-viscosity fluid at the lower portion of the distributing plate 20 according to Example 1 to Example 4 is about half of the standard deviation of the flow velocity of the high-viscosity fluid at the lower portion of the distributing plate 20 according to Comparative Example 1.

Thus, it can be seen that, when the diameter D1 of the upper surface of the distributing plate 20 is increased, the height H1 of the distributing plate 20 is decreased, and more holes 22 are formed along more concentric circles in the distributing plate 20, the high-viscosity fluid supplied to the distributing plate 20 is more evenly distributed and discharged.

### Comparative Example 2 to Comparative Example 5

Comparative Example 2 and Comparative Example 3 are to show a fluid distribution effect of the distributing plate 20 according to the ratio of the area of each inner hole 22a to the area of each outer hole 22b. To this end, the positions and number of the plurality of holes 22 in the distributing plate 20 according to Comparative Example 2 and Comparative Example 3 are the same as the positions and number of the plurality of holes 22 in the distributing plate 20 according to Example 2.

According to Comparative Example 2 and Comparative Example 3, all inner holes 22a formed in the first concentric circles have the same size, and all outer holes 22b formed in the second concentric circles have the same size. Accordingly, the area of one inner hole 22a is the same as that of another inner hole 22a, and the area of one outer hole 22b is the same as that of another outer hole 22b.

According to Comparative Example 2, the width W of each inner hole 22a is 29 mm, the length L of each inner hole 22a is 24 mm, the width W of each outer hole 22b is 18 mm, and the length L of each outer hole 22b is 25 mm. Accordingly, the ratio of the area of each inner hole 22a to the area of each outer hole 22b is 1.55.

According to Comparative Example 3, the width W of each inner hole 22a is 23 mm, the length L of each inner hole 22a is 24 mm, the width W of each outer hole 22b is 21 mm, and the length L of each outer hole 22b is 27 mm. Accordingly, the ratio of the area of each inner hole 22a to the area of each outer hole 22b is 0.97.

Comparative Example 4 and Comparative Example 5 are to show the fluid distribution effect of the distributing plate 20 according to the height H1 of the distributing plate 20. To this end, the positions, specifications (including W and L), and number of the plurality of holes 22 in the distributing plate 20 according to Comparative Example 4 and Comparative Example 5 are the same as the positions, specifications (including W and L), and number of the plurality of holes 22 in the distributing plate 20 according to Example 2.

The height H1 of the distributing plate 20 according to Comparative Example 4 is 35 mm, and the height H1 of the distributing plate 20 according to Comparative Example 5 is 120 mm.

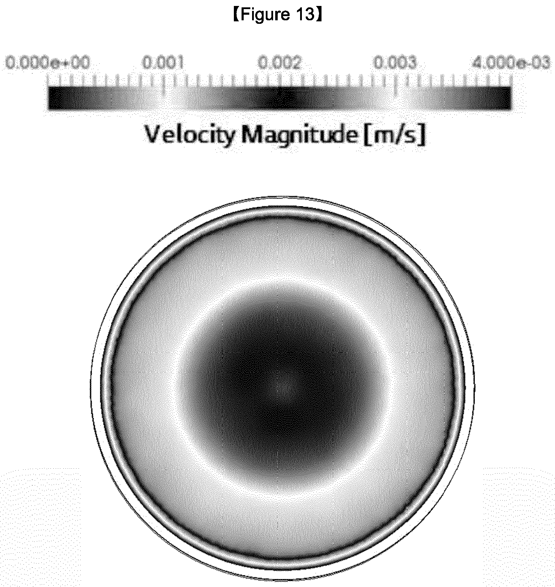

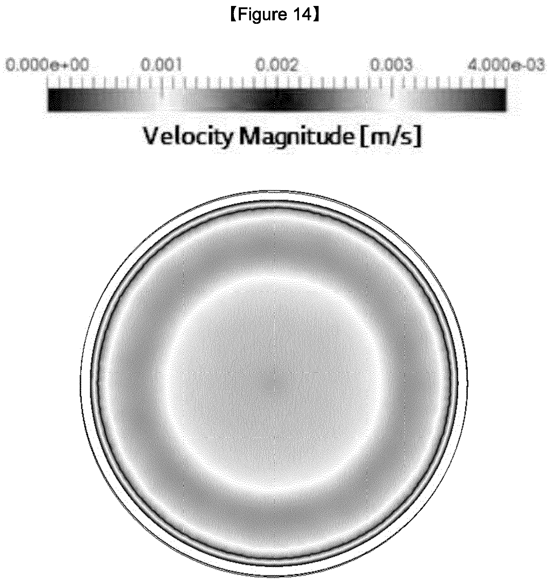

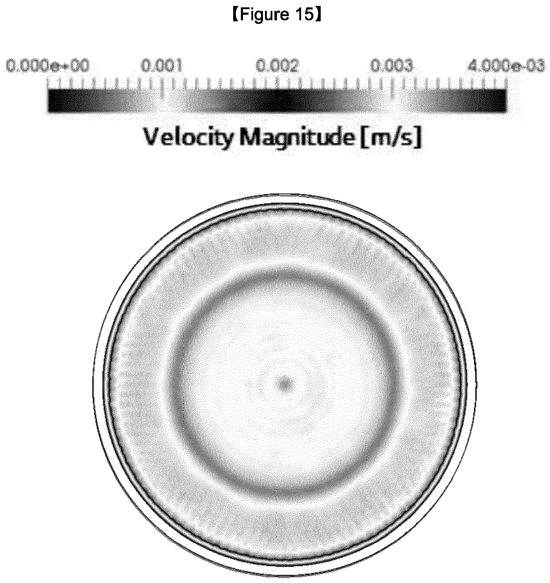

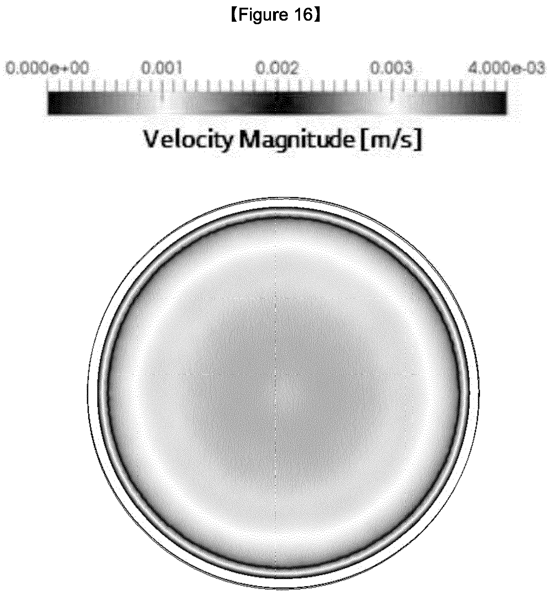

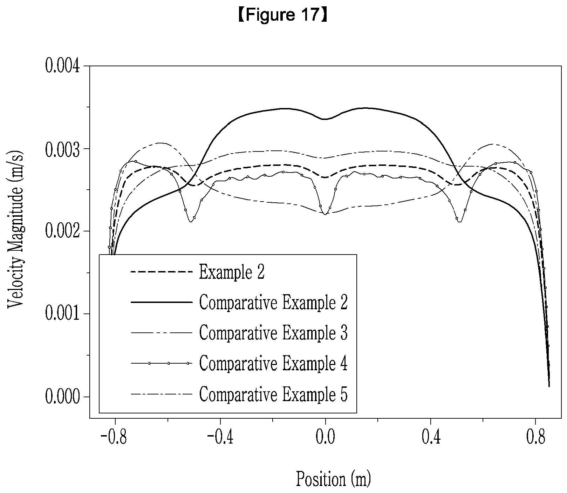

FIG. 13 shows a flow velocity of a fluid at a lower portion of a distributing plate according to Comparative Example 2, FIG. 14 shows a flow velocity of a fluid at a lower portion of a distributing plate according to Comparative Example 3, FIG. 15 shows a flow velocity of a fluid at a lower portion of a distributing plate according to Comparative Example 4, FIG. 16 shows a flow velocity of a fluid at a lower portion of a distributing plate according to Comparative Example 5, and FIG. 17 is a graph showing flow velocities of fluids at lower portions of a distributing plate according to Example 2 and distributing plates according to Comparative Example 2 to Comparative Example 5 according to positions of the distributing plates.

As shown in FIGS. 9 and 17, the flow velocity of the fluid at the lower portion of the distributing plate 20 according to Example 2 (the ratio of the area of each inner hole 22a to the area of each outer hole 22b is 1.28) is maintained within the range of 0.0023 m/s to 0.0028 m/s at the lower portion of the upper surface and the lower portion of the side surface, and the standard deviation of the flow velocity of the high-viscosity fluid at the lower portion of the distributing plate 20 is 4.00*10⁻⁴.

As shown in FIGS. 13 and 17, the flow velocity of the fluid at the lower portion of the distributing plate 20 according to Comparative Example 2 (the ratio of the area of each inner hole 22a to the area of each outer hole 22b is 1.55) is relatively fast as 0.0033 m/s to 0.0035 m/s at the lower portion of the upper surface and decreases rapidly from the lower portion of the side surface to the outer side in the radial direction and then gradually decreases. Accordingly, the standard deviation of the flow velocity of the high-viscosity fluid at the lower portion of the distributing plate 20 is 7.63*10⁻⁴, which is quite large.

As shown in FIGS. 14 and 17, the flow velocity of the fluid at the lower portion of the distributing plate 20 according to Comparative Example 3 (the ratio of the area of each inner hole 22a to the area of each outer hole 22b is 0.97) is relatively fast as 0.0028 m/s to 0.0031 m/s at the lower portion of the side surface and gradually decreases from the lower portion of the upper surface to an inner side in the radial direction. Accordingly, the standard deviation of the flow velocity of the high-viscosity fluid at the lower portion of the distributing plate 20 is 5.18*10⁻⁴, which is relatively large.

As such, it can be seen that, even if the positions and number of the plurality of holes 22 are the same in the distributing plate 20, the high-viscosity fluid supplied to the distributing plate 20 may be more evenly distributed and discharged by adjusting the ratio of the area of each inner hole 22a to the area of each outer hole 22b to 1.2 to 1.4.

As shown in FIGS. 15 and 17, the flow velocity of the fluid at the lower portion of the distributing plate 20 (the height **H1** of the distributing plate 20 is 35 mm) according to Comparative Example 4 decreases at the lower portion of the upper surface and increases at the lower portion of the side surface, so that the standard deviation of the flow velocity of the high-viscosity fluid at the lower portion of the distributing plate 20 is 4.60*10-4, which is greater than the standard deviation according to Example 2.

As shown in FIGS. 16 and 17, the flow velocity of the fluid at the lower portion of the distributing plate 20 (the height **H1** of the distributing plate 20 is 120 mm) according to Comparative Example 5 increases as a whole at the lower portion of the upper surface and decreases at the lower portion of the side surface, so that the standard deviation of the flow velocity of the high-viscosity fluid at the lower portion of the distributing plate 20 is 5.62*10⁻⁴, which is greater than the standard deviation according to Example 2.

As such, it can be seen that, even if the positions, numbers and specifications of the plurality of holes 22 in the distributing plate 20 are the same, the high-viscosity fluid supplied to the distributing plate 20 may be more evenly distributed and discharged by adjusting the height of the distributing plate 20 to 40 mm to 100 mm.

As a result, as in Comparative Example 2, when the ratio of the area of each inner hole 22a to the area of each outer hole 22b is greater than 1.4, the flow velocity of the fluid at the lower portion of the upper surface is relatively higher than the flow velocity of the fluid at the lower portion of the side surface, so that the standard deviation of the flow velocity of the high-viscosity fluid at the lower portion of the distributing plate 20 increases. **In** contrast, as in Comparative Example 3, when the ratio of the area of each inner hole 22a to the area of each outer hole 22b is less than 1.2, the flow velocity of the fluid at the lower portion of the side surface is relatively higher than the flow velocity of the fluid at the lower portion of the upper surface, so that the standard deviation of the flow velocity of the high-viscosity fluid at the lower portion of the distributing plate 20 increases.

**In** addition, as in Comparative Example 4, when the height **H1** of the distributing plate 20 is less than 40 mm, the flow velocity of the fluid at the lower portion of the distributing plate 20 decreases at the lower portion of the upper surface and increases at the lower portion of the side surface, so that the standard deviation of the flow velocity of the high-viscosity fluid increases at the lower portion of the distributing plate 20. In contrast, as in Comparative Example 5, when the height H1 of the distributing plate 20 is less than 100 mm, the flow velocity of the fluid at the lower portion of the distributing plate 20 generally increases at the lower portion of the upper surface and decreases at the lower portion of the side surface of the distributing plate 20, so that the standard deviation of the flow velocity of the high-viscosity fluid at the lower portion of the distributing plate 20 increases.

Therefore, it can be seen that, by adjusting the ratio of the area of each inner hole 22a to the area of each outer hole 22b in the distributing plate 20 to 1.2 to 1.4 and adjusting the height of the distributing plate 20 to 40 mm to 100 mm, the high-viscosity fluid supplied to the distributing plate 20 may be more evenly distributed and discharged.

Therefore, it can be seen that, by adjusting the ratio of the area of each inner hole 22a to the area of each outer hole 22b in the distributing plate 20 to 1.2 to 1.4 and adjusting the height of the distributing plate 20 to 40 mm to 100 mm, the high-viscosity fluid supplied to the distributing plate 20 may be more evenly distributed and discharged.

While this invention has been described in connection with what is presently considered to be practical exemplary embodiments, it is to be understood that the invention is not limited to the disclosed exemplary embodiments. On the contrary, it is intended to cover various modifications and equivalent arrangements included within the scope of the appended claims.

## Claims

1. An apparatus (10) of distributing a high-viscosity fluid, comprising:
a distributing plate (20) distributing and discharging the high-viscosity fluid; and
a tube bundle (30) located below the distributing plate (20) and including a plurality of tubes (32) receiving the high-viscosity fluid discharged from the distributing plate (20),
wherein the distributing plate (20) comprises
a flat upper surface;
a side surface having a diameter increasing downwardly from the upper surface; **characterized by**
a plurality of inner holes (22a) arranged along a plurality of first imaginary concentric circles on the upper surface; and
a plurality of outer holes (22b) arranged along a plurality of second imaginary concentric circles on the side surface,
wherein a ratio of an area of each inner hole to an area of each outer hole is 1.2 to 1.4.

2. The apparatus (10) of claim 1, wherein:
each of the inner holes and the outer holes is formed in an elliptical shape having a width and a length,
the width of each of the inner holes is 10 mm to 45 mm and the length of each of the inner holes is 10 mm to 38 mm, and
the width of each of the outer holes is 10 mm to 30 mm and the length of each of the outer holes is 10 mm to 40 mm.

3. The apparatus (10) of claim 1, wherein:
the distributing plate (20) has a truncated cone shape with an open lower surface, and
a height of the truncated cone is 40 mm to 100 mm.

4. The apparatus (10) of claim 3, wherein:
a diameter of the upper surface is 1040 mm to 1140 mm, and
a diameter of the lower surface is 1700 mm to 1860 mm.

5. The apparatus (10) of claim 1, wherein:
the plurality of first imaginary concentric circles is 8 circles, and
the plurality of second imaginary concentric circles is 8 circles.

6. The apparatus (10) of claim 1, wherein:
a sum of the number of the plurality of inner holes (22a) and the number of the plurality of outer holes (22b) is 1000 or more.

7. The apparatus (10) of claim 6, wherein:
the number of the plurality of inner holes (22a) is 294, and the number of the plurality of outer holes (22b) is 714.

## Patentansprüche

1. Vorrichtung (10) zum Verteilen eines hochviskosen Fluids, umfassend:
eine Verteilerplatte (20), die das hochviskose Fluid verteilt und ausgibt; und
ein Rohrbündel (30), das sich unter der Verteilerplatte (20) befindet und eine Vielzahl von Rohren (32) beinhaltet, die das von der Verteilerplatte (20) abgegebene hochviskose Fluid aufnehmen,
wobei die Verteilerplatte (20) umfasst:
eine flache obere Fläche;
eine Seitenfläche mit einem Durchmesser, der von der oberen Fläche nach unten zunimmt; **gekennzeichnet durch**
eine Vielzahl von inneren Löchern (22a), die entlang einer Vielzahl von ersten imaginären konzentrischen Kreisen auf der oberen Fläche angeordnet sind; und
eine Vielzahl von äußeren Löchern (22b), die entlang einer Vielzahl von zweiten imaginären konzentrischen Kreisen auf der Seitenfläche angeordnet sind,
wobei ein Verhältnis einer Fläche jedes inneren Lochs zu einer Fläche jedes äußeren Lochs 1,2 bis 1,4 beträgt.

2. Vorrichtung (10) nach Anspruch 1, wobei:
jedes der inneren Löcher und der äußeren Löcher in einer elliptischen Form mit einer Breite und einer Länge ausgebildet ist,
die Breite jedes der inneren Löcher 10 mm bis 45 mm beträgt und die Länge jedes der inneren Löcher 10 mm bis 38 mm beträgt, und
die Breite jedes der äußeren Löcher 10 mm bis 30 mm beträgt und die Länge jedes der äußeren Löcher 10 mm bis 40 mm beträgt.

3. Vorrichtung (10) nach Anspruch 1, wobei:
die Verteilerplatte (20) eine Kegelstumpfform mit einer offenen unteren Fläche aufweist, und
eine Höhe des Kegelstumpfs 40 mm bis 100 mm beträgt.

4. Vorrichtung (10) nach Anspruch 3, wobei:
ein Durchmesser der oberen Fläche 1040 mm bis 1140 mm beträgt, und
ein Durchmesser der unteren Fläche 1700 mm bis 1860 mm beträgt.

5. Vorrichtung (10) nach Anspruch 1, wobei:
die Vielzahl von ersten imaginären konzentrischen Kreisen 8 Kreise beträgt, und
die Vielzahl von zweiten imaginären konzentrischen Kreisen 8 Kreise beträgt.

6. Vorrichtung (10) nach Anspruch 1, wobei:
eine Summe der Anzahl der Vielzahl von inneren Löchern (22a) und der Anzahl der Vielzahl von äußeren Löchern (22b) 1000 oder mehr beträgt.

7. Vorrichtung (10) nach Anspruch 6, wobei:
die Anzahl der Vielzahl von inneren Löchern (22a) 294 beträgt und die Anzahl der Vielzahl von äußeren Löchern (22b) 714 beträgt.

## Revendications

1. Appareil (10) de distribution d'un fluide à viscosité élevée, comprenant :
une plaque de répartition (20) distribuant et évacuant le fluide à viscosité élevée ; et
un faisceau tubulaire (30) situé sous la plaque de répartition (20), et comprenant une pluralité de tubes (32) recevant le fluide à viscosité élevée évacué par la plaque de répartition (20),
la plaque de répartition (20) comprenant :
une surface supérieure plate ;
une surface latérale dont le diamètre augmente de la surface supérieure vers le bas ; **caractérisé par**
une pluralité d'orifices intérieurs (22a) agencés le long d'une pluralité de premiers cercles concentriques imaginaires sur la surface supérieure ; et
une pluralité d'orifices extérieurs (22b) agencés le long d'une pluralité de deuxièmes cercles concentriques imaginaires sur la surface latérale,
un ratio d'une superficie de chaque orifice intérieur sur une superficie de chaque orifice extérieur étant 1,2 sur 1,4.

2. Appareil (10) selon la revendication 1,
chacun des orifices intérieurs et des orifices extérieurs étant formé avec une forme elliptique ayant une largeur et une longueur,
la largeur de chacun des orifices intérieurs mesurant de 10 mm à 45 mm et la longueur de chacun des orifices intérieurs mesurant de 10 mm à 38 mm, et
la largeur de chacun des orifices extérieurs mesurant de 10 mm à 30 mm et la longueur de chacun des orifices extérieurs mesurant de 10 mm à 40 mm

3. Appareil (10) selon la revendication 1,
la plaque de répartition (20) possédant une forme tronconique avec une surface inférieure ouverte, et
le côte tronqué mesurant de 40 mm à 100 mm de haut.

4. Appareil (10) selon la revendication 3,
la surface supérieure mesurant de 1 040 mm à 1 140 mm de diamètre, et
la surface inférieure mesurant de 1 700 mm à 1 860 mm de diamètre.

5. Appareil (10) selon la revendication 1,
la pluralité de premiers cercles concentriques imaginaires étant 8 cercles, et
la pluralité de deuxièmes cercles concentriques imaginaires étant 8 cercles.

6. Appareil (10) selon la revendication 1,
une somme du nombre de la pluralité d'orifices intérieurs (22a) et du nombre de la pluralité d'orifices extérieurs (22b) étant 1 000 ou davantage.

7. Appareil (10) selon la revendication 6,
le nombre de la pluralité d'orifices intérieurs (22a) étant 294, et le nombre de la pluralité d'orifices extérieurs (22b) étant 714.
